# EUROPEAN PATENT APPLICATION

(11) **EP 4 640 537 A1**
(43) Date of publication of application: **29.10.2025**
(21) Application number: 23905387.9
(22) Date of filing: 11.10.2023
(51) Int. Cl.: B62D 37/02

(54) **SPOILER DEVICE FOR VEHICLE, AND VEHICLE HAVING SAME**

(30) Priority: 23.12.2022 CN 202211663163
(71) Applicant: Nio Technology (Anhui) Co., Ltd, Hefei City, Anhui 230601 (CN)
(72) Inventor: WANG, Yi, Shanghai 201804 (CN)
(74) Representative: Vossius & Partner Patentanwälte Rechtsanwälte mbB
(86) International application number: PCT/CN2023/123874
(87) International publication number: WO 2024/131214

(57) **Abstract**

The invention relates to a spoiler device for a vehicle and a vehicle having same. The spoiler device includes: a spoiler plate; a link mechanism, where the link mechanism is connected to the spoiler plate to drive the spoiler plate to move; a base holder, where the base holder is adapted to be fixed to a tailgate of the vehicle, and a link mechanism mounting recess for accommodating the link mechanism is formed in the base holder; and a connection bracket, where the connection bracket is fixed at a bottom of the link mechanism mounting recess, such that the link mechanism and the tailgate are fixed together through the connection bracket. The spoiler device of the invention can optimize a transfer path of a load, and prevent the tailgate from being deformed or damaged.

## Description

### REFERENCE TO PRIORITY APPLICATION

This application claims the priority to Chinese patent application No. 202211663163.9 filed on December 23, 2022, which is incorporated herein in its entirety by reference.

### TECHNICAL FIELD

The invention relates to the technical field of vehicles, in particular to a spoiler device for a vehicle and a vehicle having same.

### TECHNICAL BACKGROUND

With an increasing upturn in living standards, vehicles have become a prevailing means of transport. When a vehicle is driving on the road, the surrounding airflow generates relative motion with the vehicle, resulting in aerodynamic effects. Since the vehicle is generally designed with a curved top and a flat bottom, the air flowing over the top moves faster than the air flowing below the bottom of the vehicle, leading to a downward air pressure on the top that is less than the upward air pressure on the bottom of the vehicle, which results in a lifting force compromising the roadholding and driving stability of the vehicle.

To address the above issues, a spoiler is usually mounted to a tailgate of a vehicle to prevent the rear of the vehicle at high speeds from being lifted. The installation of the spoiler causes the airflow over the vehicle body to sink rapidly at the rear. Hence, the lifting force on the tail is reduced, the roadholding is increased, and driving performance, handling stability, comfort and driving safety are improved.

In the prior art, tailgates are designed towards diversity by using plastics in most cases. The use of plastic tailgates not only reduces vehicle weight and improves performance but also reduces shielding of signals from intelligent sensors. Additionally, to enhance the aesthetic appeal of the vehicle, through-type taillights are commonly used. However, the tailgate becomes susceptible to damage due to the plastic material and configuration of the through-type taillights. When the spoiler device is mounted to the tailgate, a link mechanism for driving the spoiler to move is heavy, which may lead to deformation, sagging, difficulty in opening and closing, or even cracking and damage of the tailgate.

In view of that, it is a pressing issue to develop a new technical solution in the art for solving the above problems.

### SUMMARY

In order to solve the technical problem that a tailgate provided with a spoiler device is prone to deformation in the prior art, the invention provides a spoiler device for a vehicle. The spoiler device includes: a spoiler plate; a link mechanism, where the link mechanism is connected to the spoiler plate to drive the spoiler plate to move; a base holder, where the base holder is adapted to be fixed to a tailgate of the vehicle, and a link mechanism mounting recess for accommodating the link mechanism is formed in the base holder; and a connection bracket, where the connection bracket is fixed at a bottom of the link mechanism mounting recess, such that the link mechanism and the tailgate are fixed together through the connection bracket.

The spoiler device for a vehicle according to the invention includes the spoiler plate, the link mechanism, the base holder and the connection bracket. The link mechanism is connected to the spoiler plate to drive the spoiler plate to move, thus facilitating the adjustment of the elevation and angle of the spoiler plate. The base holder is adapted to be fixed to the tailgate of the vehicle. The link mechanism mounting recess for accommodating the link mechanism is formed in the base holder. The connection bracket is fixed at the bottom of the link mechanism mounting recess. Through the connection bracket, the heavy link mechanism and the tailgate can be directly fixed together. Thus, a transfer path of a load is optimized and a connection strength between the spoiler device and the tailgate is improved. In addition, the connection bracket is fixed to the base holder. Thus, a mechanical strength of the base holder can be further appropriately improved, and stability of the structure is further improved. Thus, the spoiler device according to the invention can effectively solve the problem that the tailgate is prone to deformation and damage.

In a preferred technical solution of the spoiler device for a vehicle, the connection bracket includes: a transverse section, where the transverse section abuts against a bottom wall of the link mechanism mounting recess and is fixedly connected to the link mechanism and the tailgate; and a vertical section, where the vertical section extends from a tail end of the transverse section to a side close to the base holder, and the vertical section and a side wall of the link mechanism mounting recess are fixed together. Through the arrangement, the entire connection bracket has a substantially L-shaped form. Thus, the structure of the connection bracket can be simplified. In addition, the transverse section is configured to abut against the bottom wall of the link mechanism mounting recess, so as to effectively support the link mechanism accommodated in the link mechanism mounting recess. Further, the transverse section is fixedly connected to the link mechanism and the tailgate. Thus, a weight of the link mechanism and a weight of the spoiler plate connected to the link mechanism can be transferred to the tailgate through the connection bracket, and the connection strength between the spoiler device and the tailgate is improved.

In the preferred technical solution of the spoiler device for a vehicle, a plurality of spaced mounting holes are formed in the transverse section, and through holes matching the mounting holes are formed in the bottom wall. Through the arrangement, the transverse section can be connected to the link mechanism advantageously.

In the preferred technical solution of the spoiler device for a vehicle, a tailgate fixation hole spaced apart from the plurality of mounting holes is formed in the tail end of the transverse section, and the tailgate fixation hole is configured to fix the connection bracket to the tailgate. Through the arrangement of the tailgate fixation hole, the connection bracket can be fixed to the tailgate advantageously.

In the preferred technical solution of the spoiler device for a vehicle, the tailgate fixation hole is configured to allow an adaptive nut to pass therethrough to fix the connection bracket and the tailgate together. Through the arrangement of the adaptive nut, a fastening degree of a fastener can be adjusted advantageously, and the load can be transferred to the tailgate through the connection bracket advantageously.

In the preferred technical solution of the spoiler device for a vehicle, a mounting recess is formed in a side, close to a rear of the vehicle, of the base holder, a plurality of spaced fixation holes are formed in the mounting recess, and the fixation holes are configured to fix the base holder to the tailgate. Through the arrangement, the base holder can be fixed to the tailgate advantageously.

In the preferred technical solution of the spoiler device for a vehicle, a decorative plate is fixed to the base holder, the decorative plate matches the mounting recess in shape and is configured to cover the mounting recess to cover the fixation holes, and the decorative plate is flush with an upper surface of the base holder when mounted to the base holder. Through the arrangement of the decorative plate, the fixation holes can be covered, and the overall aesthetics can be improved. In addition, the fastener can be prevented from being exposed and corroded. In addition, the decorative plate is flush with the upper surface of the base, and the decorative plate and the upper surface of the base holder can form a complete appearance surface. Thus, the aesthetics can be further improved.

In the preferred technical solution of the spoiler device for a vehicle, the mounting recess is connected to the link mechanism mounting recess, and a drain hole is formed in the bottom wall. Through the arrangement, accumulated water in the mounting recess can flow into the link mechanism mounting recess and be drained out of the drain hole, preventing delayed drainage from causing corrosion of the fasteners.

In the preferred technical solution of the spoiler device for a vehicle, a second end, far from the link mechanism mounting recess, of the link mechanism is fixed to a connection portion of the spoiler plate, and an annular protrusion is formed around the connection portion; and a cover plate is formed on the second end, and the cover plate cooperates with the annular protrusion to cover the connection portion. Through the arrangement of the annular protrusion, regulatory requirements for large-angle adjustment from the spoiler plate can be satisfied. Through the arrangement of the cover plate, the connection portion can be prevented from being exposed, and the aesthetics can be improved. In addition, a change in the aerodynamic drag caused by the arrangement of the annular protrusion can be properly offset.

In order to solve the technical problem that the tailgate provided with the spoiler device is prone to deformation in the prior art, the invention provides a vehicle. The vehicle includes: a tailgate; and the spoiler device for a vehicle according to any one described above, where the spoiler device for a vehicle is fixed to the tailgate. By adopting the spoiler device for a vehicle according to any one described above, the vehicle of the invention can improve driving performance of the vehicle, and the tailgate can also be prevented from being deformed.

### BRIEF DESCRIPTION OF THE DRAWINGS

Preferred implementations of the invention are described below with reference to the accompanying drawings, in which:
FIG. 1 is a schematic diagram of a spoiler device for a vehicle according to an embodiment of the invention;
FIG. 2 is a schematic diagram of a base holder of a spoiler device for a vehicle according to an embodiment of the invention;
FIG. 3 is a schematic diagram of a spoiler plate and a link mechanism of a spoiler device for a vehicle according to an embodiment of the invention;
FIG. 4 is a sectional view of a base holder and a connection bracket of a spoiler device for a vehicle according to an embodiment of the invention;
FIG. 5 is a schematic diagram of a base holder and a connection bracket of a spoiler device for a vehicle according to an embodiment of the invention; and
FIG. 6 is a schematic diagram of a connection bracket of a spoiler device for a vehicle according to an embodiment of the invention.

List of reference numerals:
1. vehicle; 10. tailgate; 2. spoiler device; 20. base holder; 21a. left link mechanism mounting recess; 21b. right link mechanism mounting recess; 211. bottom wall; 2111. through hole; 2112. drain hole; 212. side wall; 2121. support hole; 22. mounting recess; 221. fixation hole; 222. decorative plate mounting hole; 223. snap-in recess; 23. decorative plate; 30. link mechanism; 31. first end; 311. connection column; 32. second end; 321. cover plate; 3211. cover plate connection hole; 40. spoiler plate; 41. connection portion; 42. annular protrusion; 50. connection bracket; 51. transverse section; 511. tail end of transverse section; 512. mounting hole; 513. tailgate fixation hole; 52. vertical section; and 60. adaptive nut.

### DETAILED DESCRIPTION OF EMBODIMENTS

Preferred implementations of the invention will be described below with reference to the accompanying drawings. Those skilled in the art should understand that these implementations are merely used to explain the technical principles of the invention, and are not intended to limit the scope of protection of the invention.

It should be noted that in the description of the invention, the terms including "up", "down", "left", "right", "inside", "outside", etc. that indicate the directional or positional relationship are based on the directional or positional relationship shown in the figures, for the convenience of description instead of indicating or implying that the apparatus or element must have a particular orientation and be constructed and operated in a particular orientation, and should not be construed as limitation to the invention accordingly. In addition, the terms "first" and "second" are merely used for the descriptive purpose, and cannot be construed as indicating or implying of relative importance.

In addition, it should also be noted that, in the description of the invention, the terms "mount", "provide" and "connect" should be interpreted in a broad sense unless explicitly defined and limited otherwise, which, for example, may mean a fixed connection, a detachable connection or an integral connection; and may be a direct connection, an indirect connection by means of an intermediary, or internal communication between two elements. For those skilled in the art, the specific meanings of the foregoing terms in the invention can be interpreted according to a specific situation.

In order to solve the technical problem that a tailgate provided with a spoiler device is prone to deformation in the prior art, the invention provides a spoiler device 1 for a vehicle 2. The spoiler device 2 includes: a spoiler plate 40; a link mechanism 30, where the link mechanism 30 is connected to the spoiler plate 40 to drive the spoiler plate to move; a base holder 20, where the base holder 20 is adapted to be fixed to a tailgate 10 of vehicle 1, and a link mechanism mounting recess 21 for accommodating the link mechanism 30 is formed in the base holder 20; and a connection bracket 50, where the connection bracket 50 is fixed at a bottom of the link mechanism mounting recess 21, such that the link mechanism 30 and the tailgate 10 are fixed together through the connection bracket 50.

In one or more embodiments, the vehicle 1 of the invention includes, but is not limited to, vehicle body panels (not shown in the figure), the tailgate 10, the spoiler device 2, etc. of the invention. The tailgate 10 is pivotally fixed to the vehicle body panel to open and close a trunk for easy access to items in the trunk by the user. The tailgate 10 may be made from an appropriate material such as polycarbonate (PC), polyethylene terephthalate (PET), polyamide 6 (PA6), etc. In this way, shielding of signals from smart sensors, etc. by the tailgate 10 can be alleviated besides reduction in weight of the tailgate 10 and improvement in performance of the vehicle 1. The spoiler device 2 is fixed to the tailgate 10 to prevent a rear of the vehicle 1 from being lifted by lifting force when the vehicle is traveling at a high speed. The spoiler device 2 extends on the tailgate 10 in a width direction of the tailgate 10. Alternatively, the spoiler device 2 may alternatively be arranged to a rear roof or a tailboard of the vehicle 1. In one or more embodiments, the tailgate 10 is further provided with through-type taillights (not shown in the figure) located below the spoiler device 2. The through-type taillights extend in the width direction of the tailgate 10. It should be noted that the vehicle 1 of the invention may be a battery electric vehicle, a hybrid electric vehicle, a fuel vehicle or other suitable vehicles. The vehicle 1 may be a sedan, a sport utility vehicle (SUV), a multi-purpose vehicle (MPV), or other suitable vehicles.

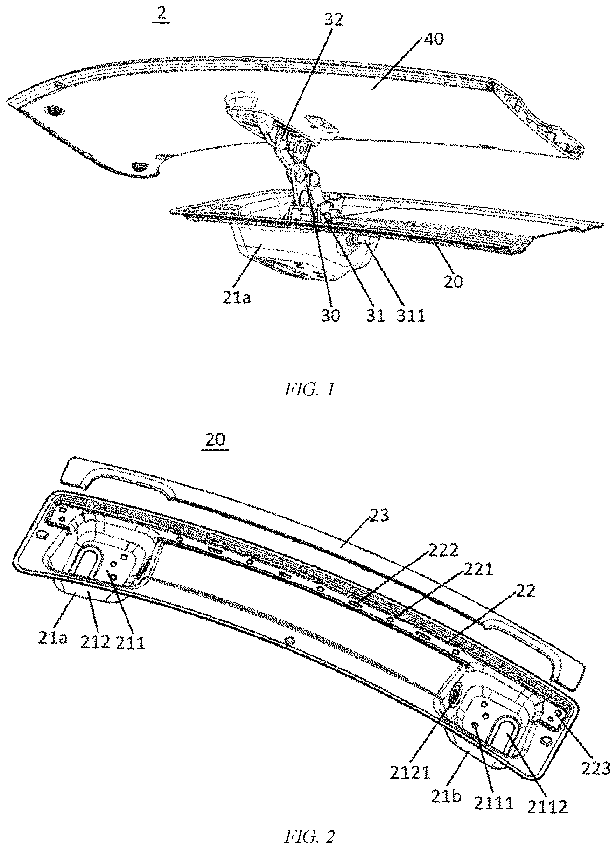

FIG. 1 is a schematic diagram of a spoiler device for a vehicle according to an embodiment of the invention. As shown in FIG. 1, in one or more embodiments, the spoiler device 2 of the invention includes a base holder 20, a link mechanism 30, a spoiler plate 40 and a connection bracket 50. The base holder 20 is fixed to a tailgate 10. Based on an orientation shown in FIG. 1, the link mechanism 30 is located above the base holder 20, and one end of the link mechanism 30 is connected to the base holder 20, and the other end thereof is connected to the spoiler plate 40. The link mechanism 30 is configured to drive the spoiler plate 40 to move close to or away from the base holder 20. When the vehicle 1 travels at a low speed, the link mechanism 30 drives the spoiler plate 40 to move close to the base holder 20, and the base holder 20 covers the base holder 20 and forms a smooth profile along with an outer surface of the tailgate 10, thereby not affecting the aerodynamic drag of the vehicle 1. When the vehicle 1 travels at a high speed, the link mechanism 30 drives the spoiler plate 40 to move away from the base holder 20, and a passage allowing gas to flow is provided between the spoiler plate 40 and the tailgate 10. Thus, the lifting force is reduced, and stability of the vehicle 1 during driving is improved. In one or more embodiments, the link mechanism 30 may further adjust a deployment angle of the spoiler plate 40, so as to further adjust lifting force at the rear of the vehicle 1.

FIG. 2 is a schematic diagram of a base holder of a spoiler device for a vehicle according to an embodiment of the invention. As shown in FIG. 2, the base holder 20 extends approximately in a width direction (based on an orientation shown in FIG. 2, that is, a left-right direction) of the tailgate 10. The base holder 20 is designed in an arch with a higher middle and lower sides. Thus, the appearance of the base holder 20 is enhanced, and rainwater can be effectively prevented from being accumulated in the base holder 20. A left link mechanism mounting recess 21a and a right link mechanism mounting recess 21b are formed at two ends of the base holder 20, respectively. The left link mechanism mounting recess 21a and the right link mechanism mounting recess 21b are symmetrical with respect to a vertical center line of the base holder 20. Each of the left link mechanism mounting recess 21a and the right link mechanism mounting recess 21b extends to a side far away from the spoiler plate 40 to form a space for accommodating a corresponding link mechanism 30. Specifically, each of the left link mechanism mounting recess 21a and the right link mechanism mounting recess 21b includes a side wall 212 extending downwards from a body of the base holder 20 and a bottom wall 211 at a tail end of the side wall 212.

With reference to FIG. 2, in one or more embodiments, four spaced through holes 2111 are formed in the bottom wall 211. Each through hole 2111 may match a corresponding mounting hole 512 in a connection bracket 50 to fix the link mechanism 30 to the connection bracket 50. Alternatively, the number of through holes 2111 may be set as a different number greater or less than four. A drain hole 2112 spaced apart from the mounting hole 512 of the connection bracket is further formed in the bottom wall 211. The drain hole 2112 is of a substantially oval hole shape, or other suitable shapes. The drain hole 2112 may be connected to a suitable drain pipe (not shown in the figure) to drain accumulated water in a timely manner.

With reference to FIG. 2, in one or more embodiments, support holes 2121 are further formed in the side wall 212 to further improve a connection strength of the link mechanism 30. Specifically, the support holes 2121 are located on opposite side walls 212 of the left link mechanism mounting recess 21a and the right link mechanism mounting recess 21b, respectively. Each support hole 2121 allows a connection column 311 of the link mechanism 30 to pass therethrough, and may be connected to a suitable fastener (such as a nut). Thus, structural stability of the link mechanism 30 mounted to the base holder 20 is improved.

As shown in FIG. 2, in one or more embodiments, a mounting recess 22 is further formed in the base holder 20. Based on the orientation shown in FIG. 2, the mounting recess 22 extends substantially in the left-right direction. The mounting recess 22 extends from the left link mechanism mounting recess 21a to the right link mechanism mounting recess 21b. That is, the mounting recess 22 is connected to the left link mechanism mounting recess 21a and the right link mechanism mounting recess 21b. In an assembled state, the mounting recess 22 is positioned at a side of a rear of the vehicle 1. Five spaced fixation holes 221 are formed in the mounting recess 22. The fastener (not shown in the figure) may pass through the fixation hole 221 from top to bottom, such that the base holder 20 is mounted to the tailgate 10 advantageously, thus improving assembly efficiency. The fastener includes, but is not limited to, a screw, a bolt, etc. In one or more embodiments, the fastener is coated with a suitable sealant. Thus, a periphery of the fixation hole 221 can be sealed, and the fastener can be further prevented from being corroded by rainwater. Alternatively, the number of fixation holes 221 may be set as a different number greater or less than five. In one or more embodiments, four spaced decorative plate mounting holes 222 are further formed in the mounting recess 22. Preferably, each decorative plate mounting hole 222 is located between two adjacent fixation holes 221. Each decorative plate mounting hole 222 has a substantially rectangular and rounded shape. Each decorative plate mounting hole 222 allows a corresponding snap-in projection (not shown in the figure) on the decorative plate 23 to be inserted therein to snap the decorative plate 23 in the base holder 20. Alternatively, the number of decorative plate mounting holes 222 may be set as a different number greater or less than four. Alternatively, the decorative plate 23 and the base holder 20 may be connected to each other by other suitable methods such as bonding. In one or more embodiments, snap-in recesses 223 are further formed in a left side and a right side (located on a left side of the left link mechanism mounting recess 21a and a right side of the right link mechanism mounting recess 21b respectively) of the mounting recess 22. Each snap-in recess 223 cooperates with a claw (not shown in the figure) on the decorative plate 23 to further improve fixation firmness between the decorative plate 23 and the base holder 20.

As shown in FIG. 2, in one or more embodiments, the decorative plate 23 is further arranged in the mounting recess 22. The decorative plate 23 may be made from suitable resin (such as PC and PET), etc. The decorative plate 23 extends in a length direction of the mounting recess 22, and the decorative plate 23 matches the mounting recess 22 in shape. When the decorative plate 23 covers the mounting recess 22, the decorative plate 23 is flush with an upper surface of the base holder 20, and the decorative plate 23 and the upper surface of the base holder 20 can form a complete profile, thus improving aesthetics and aerodynamic performance of the vehicle 1. In addition, the decorative plate 23 covers the mounting recess 22 to cover the fixation hole 221 and the fastener fixed therein. A plurality of snap-in projections (not shown in the figure) and a plurality of claws (not shown in the figure) are formed on the decorative plate 23. Each snap-in projection can cooperate with a corresponding decorative plate mounting hole 222, and each claw can cooperate with a corresponding snap-in recess 223 to fix the decorative plate 23 into the mounting recess 22 advantageously and firmly.

As shown in FIGS. 1 and 2, in one or more embodiments, the spoiler device 2 has two link mechanisms 30. The two link mechanisms 30 are located in the left link mechanism mounting recess 21a and the right link mechanism mounting recess 21b of the base holder 20, respectively. In one or more embodiments, the link mechanism 30 is composed of a plurality of links (not indicated in the figure) connected in sequence, and the plurality of links are rotatably connected to one another to control the spoiler plate 40 to move close to or away from the base holder 20. The link mechanism 30 is provided with a first end 31 connected to the base holder 20 and a second end 32 connected to the spoiler plate 40. Specifically, the first end 31 abuts against an upper surface of the bottom wall 211, and the first end 31 is provided with a fastening hole allowing a fastener to pass therethrough. The fastening hole may be opposite a corresponding through hole 2111 in the bottom wall 211 and the mounting hole 512 in the connection bracket 50 located below the bottom wall 211, such that the connection bracket 30, the bottom wall 211 and the connection bracket 50 can be connected to one another through the fastener. In one or more embodiments, the connection column 311 extending substantially in a left-right direction is formed on the first end 31. The connection column 311 may be inserted into a corresponding support hole 2121 to further improve connection stability between the link mechanism 30 and the base holder 20.

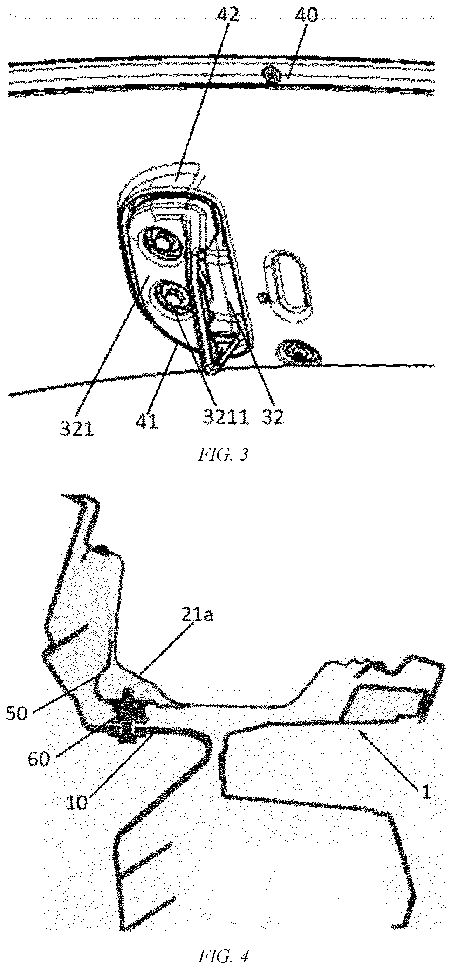

FIG. 3 is a schematic diagram of a spoiler plate and a link mechanism of a spoiler device for a vehicle according to an embodiment of the invention. As shown in FIGS. 1 and 3, the spoiler plate 40 is of a substantially rectangular plate-like structure. The spoiler plate 40 is connected to link mechanisms 30 at a left side and a right side. Specifically, a connection portion 41 is formed on a side (based on the orientation shown in FIG. 1, that is, a lower surface), close to the base holder 20, of the spoiler plate 40. The connection portion 41 is connected to the second end 32 of each link mechanism 30. In one or more embodiments, an annular protrusion 42 extending downwards from the lower surface of the spoiler plate 40 is formed around the connection portion 41. Through the arrangement of the annular protrusion 42, regulatory requirements for protrusions can be satisfied while large-angle adjustment of the spoiler plate 40 can be implemented. An extension height of the annular protrusion 42 may be adjusted according to actual needs.

As shown in FIGS. 1 and 3, in one or more embodiments, a cover plate 321 that can be inserted into the annular protrusion 42 is formed on the second end 32 of the link mechanism 30. The cover plate 321 may be made from a suitable resin material (such as PC and PET). Through the arrangement of the cover plate 321, the link mechanism 30 and the spoiler plate 40 can be connected to each other advantageously, the connection portion 41 can also be covered, and reduction in aerodynamic performance by the arrangement of the annular protrusion 42 can also be alleviated. The cover plate 321 matches the annular protrusion 42 in shape, such that the cover plate 321 can be mounted in the annular protrusion 42 to cover the connection portion 41. Two spaced cover plate connection holes 3211 are formed in the cover plate 321. Through the arrangement of the cover plate connection hole 3211, the cover plate connection hole can cooperate with the fastener to fix the cover plate 321 to the spoiler plate 40 advantageously. The fastener includes, but is not limited to, a screw, a bolt, etc. In one or more embodiments, a connection plate (not shown in the figure) is further formed in the cover plate 321. In an assembled state, the connection plate abuts against the spoiler plate 40, and the fastener sequentially passes through the cover plate 321 and the connection plate, so as to fix the link mechanism 30 to the spoiler plate 40. Through the arrangement of the connection plate, connection reliability between the link mechanism 30 and the spoiler plate 40 can be effectively improved.

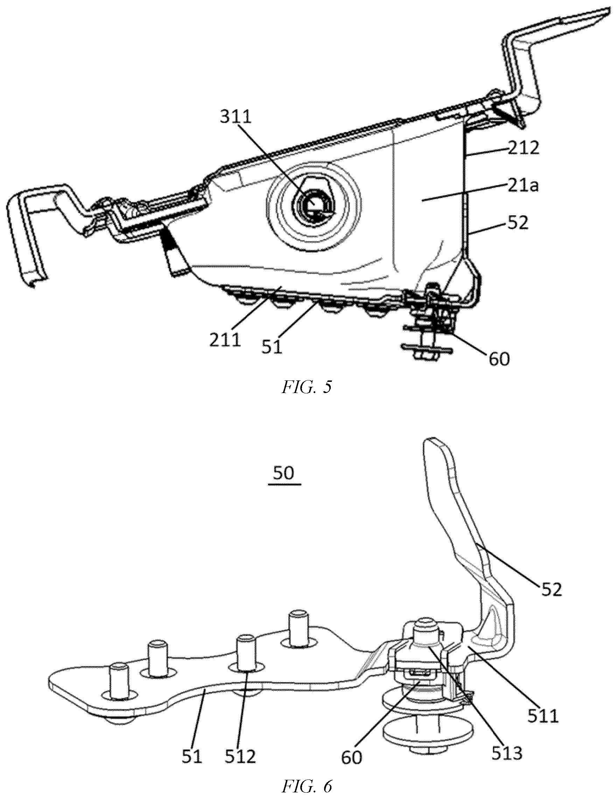

FIG. 4 is a sectional view of a base holder and a connection bracket of a spoiler device for a vehicle according to an embodiment of the invention; FIG. 5 is a schematic diagram of a base holder and a connection bracket of a spoiler device for a vehicle according to an embodiment of the invention; and FIG. 6 is a schematic diagram of a connection bracket of a spoiler device for a vehicle according to an embodiment of the invention. As shown in FIGS. 4-6, in one or more embodiments, two connection brackets 50 are fixed to a bottom of the left link mechanism mounting recess 21a and a bottom of the right link mechanism mounting recess 21b, respectively. Alternatively, merely one connection bracket 50 may be fixed to a bottom of the left link mechanism mounting recess 21a or a bottom of the right link mechanism mounting recess 21b. The connection bracket 50 is connected to the link mechanism 30 and the tailgate 10. Thus, a transfer path of a load is optimized, and the load brought by the link mechanism 30 is transferred to the tailgate 10 through the connection bracket 50 connected to the link mechanism. Further, the connection bracket 50 is fixed to the left link mechanism mounting recess 21a and/or the right link mechanism mounting recess 21b, such that the mechanical strength of the base holder 20 can be further improved. Thus, the spoiler device 2 of the invention can effectively solve the problem that the tailgate 10 is prone to deformation and damage.

As shown in FIG. 6, in one or more embodiments, the connection bracket 50 includes a transverse section 51 and a vertical section 52 connected to each other. The transverse section 51 abuts against the bottom wall 211 of the link mechanism mounting recess (including the left link mechanism mounting recess 21a and/or the right link mechanism mounting recess 21b). Specifically, an upper surface of the transverse section 51 abuts against a corresponding lower surface of the bottom wall 211. The vertical section 52 extends from a tail end 511 of the transverse section to a side close to the base holder 20. Thus, the entire connection bracket 50 has a substantially L-shaped form, such that the connection bracket has a simple structure. The vertical section 52 and the side wall 212 of the link mechanism mounting recess 21 are fixed together. A fixation method includes, but is not limited to, welding, riveting, screwing, etc.

With reference to FIG. 6, in one or more embodiments, the mounting holes 512 corresponding to the plurality of through holes 2111 are formed in the transverse section 51. The fastener (not indicated in the figure) passes through the mounting hole 512, the through hole 2111 and the fastening hole on the link mechanism 30, so as to fix the connection bracket 50, the base holder 20 and the link mechanism 30 together. The fastener includes, but is not limited to, a bolt, a nut, a gasket, etc.

With reference to FIG. 6, in one or more embodiments, a tailgate fixation hole 513 spaced apart from the mounting hole 512 is further formed in the transverse section 51. The tailgate fixation hole 513 is located in the tail end 511 of the transverse section. The tailgate fixation hole 513 cooperates with a suitable fastener (not indicated in the figure) and an adaptive nut 60 to fix the connection bracket 50 to the tailgate 10 advantageously. In the assembled state, the adaptive nut 60 is located between the transverse section 51 and the tailgate 10, and the fastener sequentially passes through the tailgate 10, the adaptive nut 60 and the connection bracket 50 from bottom to top. Through the arrangement of the adaptive nut 60, the connection bracket 50 can be fixed to the tailgate 10 advantageously, a fastening degree of the fastener can also be flexibly adjusted, so that the load can be transferred to the tailgate 10 through the connection bracket 50 advantageously.

Hereto, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

## Claims

1. A spoiler device for a vehicle, comprising:
a spoiler plate;
a link mechanism, wherein the link mechanism is connected to the spoiler plate to drive the spoiler plate to move;
a base holder, wherein the base holder is adapted to be fixed to a tailgate of the vehicle, and a link mechanism mounting recess for accommodating the link mechanism is formed in the base holder; and
a connection bracket, wherein the connection bracket is fixed at a bottom of the link mechanism mounting recess, such that the link mechanism and the tailgate are fixed together through the connection bracket.

2. The spoiler device for a vehicle of claim 1, wherein the connection bracket comprises:
a transverse section, wherein the transverse section abuts against a bottom wall of the link mechanism mounting recess and is fixedly connected to the link mechanism and the tailgate; and
a vertical section, wherein the vertical section extends from a tail end of the transverse section towards a side close to the base holder to a side wall of the link mechanism mounting recess.

3. The spoiler device for a vehicle of claim 2, wherein a plurality of spaced mounting holes are formed in the transverse section, and through holes matching the mounting holes are formed in the bottom wall.

4. The spoiler device for a vehicle of claim 3, wherein a tailgate fixation hole spaced apart from the plurality of mounting holes is formed in the tail end of the transverse section, and the tailgate fixation hole is configured to fix the connection bracket to the tailgate.

5. The spoiler device for a vehicle of claim 4, wherein the tailgate fixation hole is configured to allow an adaptive nut to pass therethrough to fix the connection bracket and the tailgate together.

6. The spoiler device for a vehicle of any one of claims 1-5, wherein a mounting recess is formed in a side, close to a rear of the vehicle, of the base holder, a plurality of spaced fixation holes are formed in the mounting recess, and the fixation holes are configured to fix the base holder to the tailgate.

7. The spoiler device for a vehicle of claim 6, wherein a decorative plate is fixed to the base holder, the decorative plate matches the mounting recess in shape and is configured to cover the mounting recess to cover the fixation holes, and the decorative plate is flush with an upper surface of the base holder when mounted to the base holder.

8. The spoiler device for a vehicle of claim 7, wherein the mounting recess is connected to the link mechanism mounting recess, and a drain hole is formed in the bottom wall of the link mechanism mounting recess.

9. The spoiler device for a vehicle of claim 1, wherein a second end, far from the link mechanism mounting recess, of the link mechanism is fixed to a connection portion of the spoiler plate, and an annular protrusion is formed around the connection portion; and
a cover plate is formed on the second end, and the cover plate cooperates with the annular protrusion to cover the connection portion.

10. A vehicle, comprising:
a tailgate; and
the spoiler device for a vehicle of any one of claims 1-9, wherein the spoiler device for a vehicle is fixed to the tailgate.
